# EUROPÄISCHE PATENTSCHRIFT

(11) **EP 1 379 465 B1**
(45) Veröffentlichungstag und Bekanntmachung des Hinweises auf die Patenterteilung: **15.02.2012**
(21) Anmeldenummer: 02735032.1
(22) Anmeldetag: 09.04.2002
(51) Int. Cl.: C01B 3/38, C01B 3/48, C01B 3/50, C01B 3/56, B01J 19/24, B01J 8/06, B01J 8/04, C01B 3/32

(54) **KOMPAKT-DAMPF-REFORMER**
COMPACT STEAM REFORMER
REFORMEUR COMPACT A VAPEUR

(30) Priorität: 19.04.2001 DE 10119083
(43) Veröffentlichungstag der Anmeldung: 14.01.2004
(73) Patentinhaber: WS Reformer GmbH, 71272 Renningen (DE)
(72) Erfinder: WÜNNING, Joachim A., 71229 Leonberg (DE)
(74) Vertreter: Rüger, Barthelt & Abel
(86) Internationale Anmeldenummer: PCT/DE2002/001285
(87) Internationale Veröffentlichungsnummer: WO 2002/085781

(56) Entgegenhaltungen:
- EP-A- 0 435 642
- EP-A- 1 048 343
- EP-A1- 0 922 666
- EP-A1- 0 922 666
- WO-A-00/22690
- GB-A- 2 153 382
- GB-A- 2 247 414
- US-A- 4 861 348
- US-A- 6 090 312
- US-A- 6 090 312
- PATENT ABSTRACTS OF JAPAN vol. 003, no. 037 (C-041), 29. März 1979 (1979-03-29) & JP 54 011902 A (TOYOTA MOTOR CORP;OTHERS: 01), 29. Januar 1979 (1979-01-29)

## Beschreibung

Die Erfindung betrifft einen Reformer zur Herstellung von Wasserstoff mit den Merkmalen des Oberbegriffs des Patentanspruchs 1, sowie ein Verfahren zur Wasserstoffherstellung aus Wasser und Kohlenwasserstoffverbindungen.

Zur Wasserstofferzeugung sind Dampf und eine kohlenwasserstoffverbindung (CₓH_{y}, organische Verbindung, Kohlenwasserstoffgemisch) bei hoher Temperatur an einem Katalysator zur Reaktion zu bringen.

Aus der EP 0 848 989 A2 ist ein Gleich- oder Gegenstromreaktor bekannt, der ein monolithisches Element mit vielen zueinander parallelen Kanälen enthält, die in zwei miteinander verschachtelte Gruppen eingeteilt sind. Eine Gruppe wird von den Reaktanden (Edukte) durchströmt, während die andere Gruppe von einem Brenngas-/Luftgemisch durchströmt wird.

Gehört Dampf zu den Reaktanden, ist dieser gesondert zu erzeugen.

Aus der US-PS 5,484,577 ist ein Reformer mit einer Brennkammer bekannt, die über einen Gasbrenner beheizt ist. In der Brennkammer ist ein im Wesentlichen zylindrisches Reaktionsgefäß angeordnet, dessen äußerer Mantel von der erzeugten Gasflamme und den heißen Verbrennungsgasen beheizt ist. In dem Reaktionsgefäß sind in einem äußeren Ringebereich Katalysatorpellets angeordnet. Das Reaktionsgasgemisch strömt durch die Katalysatorpellets und durch einen zylindrischen Rückleitungskanal zu dem Gasaustritt.

Die Reaktanden werden gas- bzw. dampfförmig zugeführt.

Dies gilt auch für den Reformer gemäß der EP 0 435 642 A2 und auch der US-PS 5,811,065, bei der mehrere Reformer zu einer Reformerbatterie zusammenfasst sind.

Aus EP0922666 A1 ist ein Reformer zur Herstellung von Wasserstoff mit einem Heizraum, einem sich in den Heizraum erstreckenden Reaktionsgefäß, in das wenigstens ein Eingangskanal hineinführt und aus dem ein Ausgangskanal herausführt und worin der Eingangs- und der Ausgangskanal durch einen durch das Reformat beheizten Verdampfer führen, bekannt.

Außerdem ist aus der WO 00/22690 ein Reformer bekannt, dem die Reaktanden, beispielsweise Methanol und Wasser in flüssiger Form zugeführt werden können, die Verdampfung der Reaktanden erfolgt innerhalb des Reformers. Dazu ist in dem Reformer eine Abgaskammer ausgebildet, die von heißen Abgasen eines zur Beheizung des Reformers dienenden Brenners durchströmt ist. In dieser Kammer ist eine Rohrschlange angeordnet, die von den heißen Abgasen umspült wird. Zugeführtes flüssiges Methanol und Wasser werden in dieser Rohrschlange verdampft.

In letzter Zeit werden für die Bereitstellung von Wasserstoff als Prozess- oder Schutzgas sowie zur Stromerzeugung mit Brennstoffzellen kleine Reformeranlagen benötigt, die eine Leistung von etwa 1 bis 200 Nm³/h Wasserstoff haben. Bei solchen Kompakt-Reformern wird auf verschiedene Weise versucht, den Wärmehaushalt zu optimieren.

Der Einsatz von Reformern zur Wasserstoffversorgung von Brennstoffzellen, insbesondere in Kleinkraftwerken im Bereich von 5 kW bis 20 kW, erfordert eine schnelle Anpassung der Wassererzeugung an Lastwechsel. Die Wasserstoffausbeute soll der von Großanlagen entsprechen. Bei Erdgas als Ausgangsgas sind das etwa 2,5 bis 2,7 m³ Wasserstoff je m³ Erdgas. Dies entspricht einem Wirkungsgrad für die Energieumwandlung von 75 bis 80 % bezogen jeweils auf den unteren Heizwert.

Es ist Aufgabe der Erfindung, einen kompakten Reformer zu schaffen.

Der erfindungsgemäße Reformer erfüllt diese Forderung. Der Reformer erzeugt Wasserstoff aus Wasser und Methan oder anderen Kohlenwasserstoffen im dampfförmigen (gasförmigen) Zustand bei höherer Temperatur an einem Katalysator. Zur Wasserverdampfung ist ein Verdampfungskühler vorgesehen. Zugeführtes Wasser wird in dem Verdampfungskühler weitgehend mit der Wärme der ausströmenden Reaktionsprodukte (Reformat) verdampft.

Die Massenströme der Produkte und der Edukte sind zwangsläufig gleich. Jede Änderung der Verdampfungsleistung bei Laständerung geht mit einer entsprechenden Änderung des Reformatmassenstroms einher - entsprechend ändert sich der Leistungseintrag in den Verdampfungskühler. Alle Stoffströme in das Reaktionsgefäß hinein und aus diesem heraus sind immer zeitsynchron, wodurch eine lastgeführte Verdampfung möglich wird. Die thermische Trägheit des Reaktionsgefäßes und die Ansprechzeit für die Brenner zur Änderung der Heizleistung wirkt nicht hemmend auf die Laständerungsgeschwindigkeit. Im Gegenteil, bei einem Lastsprung wirkt die Wärmeträgheit des Reaktionsgefäßes als Wärmepuffer und macht eine besonders schnelle Laständerung gerade erst möglich. Laständerungen von 100% sind in wenigen Sekunden durchführbar.

Die Verdampfung des Wassers und gegebenenfalls des Brennstoffs erfolgt am Eingang des Reformers im Wesentlichen durch das abzukühlende Reformat. Nur ein Bruchteil der erforderlichen Wärme wird bei Bedarf dem Abgas des Brenners entnommen, wodurch die Verdampfertemperatur geregelt werden kann.

Der Verdampfungskühler ist als Spaltverdampfer ausgebildet, bei dem der Eingangskanal und der Ausgangskanal als schraubenförmige Spaltkanäle ausgebildet sind. Der Eingangskanal wird vorzugsweise zwischen der Innenwandfläche des Reaktionsgefäßes und einen Einsatzkörper ausgebildet. Der Ausgangskanal führt vorzugsweise an der Innenwandfläche des Einsatzkörper entlang. Die Zuführung von Wasser und Brennstoff erfolgt vorzugsweise über Kapillaren in den gemeinsamen Eingangskanal. Es erfolgt somit die Verdampfung eines Wasser/Brennstoff-Gemischs. Der Brennstoff kann gasförmig oder flüssig sein. Auftretende Zerstäubereffekte unterstützen die Verdampfung.

Das Reaktionsgefäß ist vorzugsweise so ausgebildet, dass es auch bei hohen Temperaturen (z.B. bis 1000°C) hohen Drücken (z.B. 10 oder 20 bar) widersteht. Dazu ist es vorzugsweise als zylindrisches Druckgefäß ausgebildet. Es ermöglicht die Abgabe von Wasserstoff unter Druck zur Durchführung einer Gasreinigung z.B. mit einem Membranverfahren - eine Nachverdichtung kann entfallen. Aufgrund des geringeren Volumens der Edukte ist das Verdichten auf der Zuführseite des Reformers mit wesentlich weniger Verdichterenergie (Faktor 5) zu erreichen, als bei Nachverdichtung hinter dem Reformer.

Der Verdampfer wird hauptsächlich durch das Reformat beheizt. Zusätzlich kann eine Abgasbeheizung durch die Wandung des Reaktionsgefäßes erfolgen. Dadurch wird es möglich, die Verdampfertemperatur genau zu regulieren. Es werden vorzugsweise über 90 % der Verdampferleistung aus der Wärmeenergie des Reformats bestritten. Nur ein Teil der Verdampfungswärme wird durch Wärmeleitung des Reaktionsgefäßes und durch einen Abgasteilstrom ergänzt. Dadurch kann der Verdampfungskühler auch beim Start der Anlage oder im Leerlauf auf der gewünschten Temperatur gehalten werden. Dazu kann in einem entsprechenden Abgasteilstromkanal, der beispielsweise an der Außenfläche des Reaktionsgefäßes entlangführt, eine Reguliereinrichtung (Temperaturregler) vorgesehen sein. Der Wirkungsgrad der Energieumwandlung liegt bei bis zu 80 % oder mehr.

Der Wärmetauscher ist vorzugsweise in dem Druckgefäß angeordnet, so dass in dem Eingangskanal und dem Ausgangskanal nahezu gleiche Drücke herrschen. Der Wärmetauscher ist somit kräftefrei.

Der Brenner zur Beheizung des Reaktionsgefäßes ist vorzugsweise ein die Abgaswärme ausnutzender Brenner, beispielsweise ein Rekuperatorbrenner oder ein Regeneratorbrenner. Der Brenner kann anhand der Brennraumtemperatur geregelt werden. Eine Anpassung an den jeweiligen Wärmebedarf des Reformers ergibt sich somit automatisch. Temporäre Unterschiede zwischen Wärmebedarf und Wärmelieferung werden durch die in dem Reformer gespeicherte Wärme ausgeglichen.

Der Brennraum kann für die flammenlose Oxidation eingerichtet sein. Dazu werden kleinräumige Wirbel und Zirkulationen vermieden, die zur Ausbildung und Haltung von Flammen dienen könnten. Es ergibt sich damit ein NOₓ-armer und verschleißarmer Betrieb. Außerdem sind Schwankungen des Heizwerts des Brenngases unkritisch.

Bei einer bevorzugten Ausführungsform sind ein oder mehrere Reaktionsgefäße sowie ein oder mehrere Brenner konzentrisch zueinander angeordnet. Beispielsweise ist ein zentral angeordneter Brenner von mehreren Reaktionsgefäßen umgeben. Umgekehrt kann auch ein Reaktionsgefäß von mehreren Brennern umgeben sein oder diese in einer Ausnehmung aufnehmen. In beiden Fällen sind das oder die Reaktionsgefäße sowie der oder die Brenner von einer Seite her in einen vorzugsweise zylindrischen Raum des Gehäuses eingeführt. Dies ergibt eine kompakte Ausbildung der gesamten Einrichtung und gestattet eine vereinfachte Regelung. Beispielsweise kann auf eine Regelung der Abgasteilströme zur Anpassung an unterschiedliche Lastfälle verzichtet werden. Weiter lassen sich Wärmeverluste reduzieren.

Das Reaktionsgefäß kann aus Keramik ausgebildet sein, was die Verschleißfestigkeit gegen Korrosion bei hohen Temperaturen noch wesentlich erhöht. Bei einer bevorzugten Ausführungsform weist es einen in dem Brennraum ragenden schlankeren Teil auf, in dem der eigentliche Reformingprozess zwischen 700 und 1200°C stattfindet. Bedarfsweise kann es einen Abschnitt mit größerem Durchmesser aufweisen, der Platz für Katalysatoren für den Pre-Reformingprozess (300 bis 500°C) zur Aufspaltung von langkettigen CₓH_{y} in CH₄ schafft und den Verdampfungskühler aufnimmt. Dieser ist vorzugsweise ringförmig ausgebildet. Sein Innenraum, der bei einer Temperatur zwischen 200 und 400°C liegt, können ein Katalysator zur Durchführung einer Shiftreaktion oder ein ausgangsseitiger Membranfilter zur Zurückhaltung von Kohlenmonoxid angeordnet sein.

Der Verdampfungskühler gestattet eine schnelle und bedarfsgerechte Verdampfung des Wassers und gegebenenfalls des Brennstoffs. Solange Wasser flüssig ist hält es den Verdampfer unterhalb seiner druckabhängigen Siedetemperatur von 100 bis 180°C. Dies ermöglicht andererseits eine schockartige Abkühlung des Reformats (Quenchcooling). Dadurch wird Rußbildung, die an Flächen mit Temperaturen zwischen 400 und 600°C auftritt, konsequent vermieden.

Weitere Einzelheiten vorteilhafter Ausführungsformen der Erfindung sind Gegenstand der Zeichnung und der nachfolgenden Beschreibung.

In der Zeichnung sind Ausführungsbeispiele der Erfindung veranschaulicht. Es zeigen:
- Figur 1: ein Reformersystem mit Reformer in schematischer, längs geschnittener Darstellung,
- Figur 2: eine abgewandelte Ausführungsform des Reformers nach Figur 1,
- Figur 3: eine abgewandelte Ausführungsform eines Reformers mit Beheizung durch Regenerativbrenner in schematischer Darstellung,
- Figur 4: einen Reformer mit Keramik-Reformer-Rohr und Shiftreaktor,
- Figur 5: einen Reformer mit Keramik-Reformer-Rohr und Trennmembrankörper in schematischer und teilweise geschnittener Darstellung,
- Figur 6: eine abgewandelte Ausführungsform eines Reformers in längsgeschnittener, schematischer Darstellung,
- Figur 7: den Reformer nach Figur 6 in quergeschnittener Darstellung,
- Figur 8: eine weitere Ausführungsform des Reformers in längsgeschnittener, schematischer Darstellung und
- Figur 9: den Reformer nach Figur 8 in quergeschnittener, schematischer Darstellung.

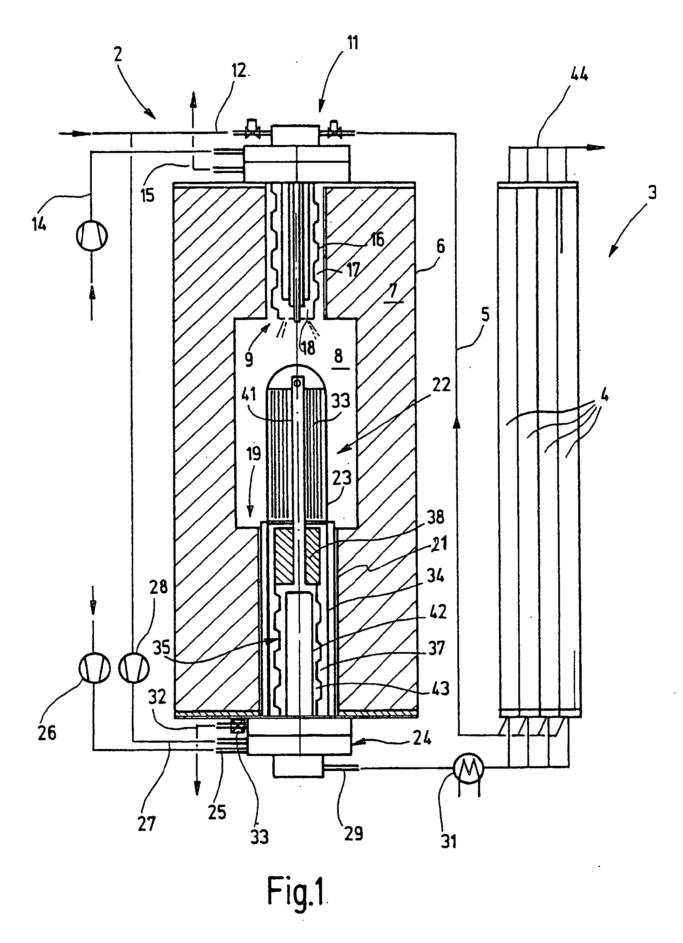

Figur 1 zeigt eine Reforming-Anlage 1 mit Reformer 2 zur Erzeugung von Wasserstoff aus Brennstoff und Wasser. Dem Reformer 2 ist eine PSA 3 (Pressure Swing Adsorption, d.h. Druckwechseladsorptionsanlage) zur Abscheidung von CO nachgeschaltet. Die PSA 3 weist mehrere Adsorptionssäulen 4 auf, die periodisch von dem Reformat durchströmt und rückgespült werden. Restgase werden über eine Leitung 5 dem Reformer 2 zugeführt.

Der Reformer 2 weist ein z.B. zylindrisches Gehäuse 6 mit einem Wärme-Isoliermantel 7 auf. Dieser umschließt einen z.B. zylindrischen Heiz- oder Brennraum 8, an dessen Stirnseite 9 ein Brenner 11 angeordnet ist. Der Brenner 11 ist an die Leitung 5 sowie eine Brennstoffleitung 12 angeschlossen. Über eine Leitung 14 wird dem Brenner 11 Luft zugeführt. Abgase verlassen den Brenner 11 über eine Abgasleitung 15. Der Brenner 11 weist einen Rekuperator 16 auf, der außen einen ringförmigen Abgaskanal 17 und innen einen Luftzuführungskanal 18 begrenzt. Der Rekuperator 16 dient der Ausnutzung der Abgaswärme. Sie wird auf die zuströmende Luft und gegebenenfalls auf den Brennstoff übertragen.

An der dem Brenner 11 gegenüber liegenden (unteren) Stirnseite 19 des Brennraums 8 weist der Isoliermantel 7 einen zylindrischen Durchgang 21 auf, in dem koaxial zu dem Brenner 11 ein chemischer Reaktor 22 angeordnet ist, der in den Brennraum 8 ragt. Der Reaktor 22 weist als Reaktionsgefäß ein endseitig geschlossenes Rohr 23 z.B. aus hitzebeständigem Stahl oder einem anderen geeigneten Metall auf, dessen geschlossenes Ende zu dem Brenner 11 weist. Der Brenner 11 kann davon abweichend an jeder beliebigen, geeigneten Stelle des Brennraums 8 angeordnet werden.

Das Rohr 23 ist an seinem offenen Ende an einem Kopf 24 gefasst, über den die Edukte zugeführt und die Produkte abgeführt werden. Dazu dienen eine Leitung 25, die über eine Wasserpumpe 26 mit Wasser des gewünschten Drucks (z.B. 10 bar) und der gewünschten Menge beaufschlagt wird, sowie eine Leitung 27 für Brennstoff. Diese ist mit der Brennstoffleitung 12 verbunden, wobei eine Brennstoffpumpe 28 dazu dient, Brennstoff in der gewünschten Menge und mit dem gewünschten Druck (10 bar) in den Reaktor 22 zu fördern. An dem Kopf 24 ist eine Reformatleitung 29 vorgesehen, die über einen Reformatkühler 31 zu der PSA 3 führt. Außerdem ist an dem Kopf 24 eine Abgasleitung 32 mit einem Regulierventil 33 vorgesehen (z.B. ein Thermostatventil) über die bedarfsweise Abgas aus dem Brennraum 8 über einen ringspaltförmigen Kanal 34 an dem Rohr 23 entlang nach außen geführt werden kann.

In dem Rohr 23 ist unmittelbar im Anschluss an den Kopf 24 ein als Verdampfer dienender Verdampfungskühler 35 angeordnet. Zu diesem gehört ein rohrförmiger, an seiner Außenseite mit ein oder mehreren flachen Gewindegängen, versehener Rohrkörper 36, dessen Außenseite mit der Innenwandung des Rohrs 23 einen Eingangskanal 37 begrenzt. Dieser führt die Edukte in einen spaltförmigen, schraubenförmigen Kanal und dann an der äußeren Mantelfläche eines ringförmigen Wärmeisolationselement 38 vorbei in den Reaktionsraum des Reaktors 22, in dem ein Katalysator 39 angeordnet ist. Der Katalysator 39 füllt den Reaktionsraum nahezu vollständig aus. Er weist einen zentralen Kanal auf, durch den ein Sammelrohr 41 zu dem Verdampfungskühler 35 zurückführt. Es ist an seinem dem Katalysator 39 durchragenden Ende mit Gaseintrittsöffnungen versehen und ist ansonsten geschlossen. Es mündet in den Innenraum des Verdampfungskühlers 35, in dem ein Einsatzkörper 42 angeordnet ist. Dessen etwa zylindrische Mantelfläche begrenzt mit der Innenwandung des Verdampfungskühlers 35 einen spaltförmigen und vorzugsweise schraubenförmig gewundenen Ausgangskanal 43, der zu der Reformatleitung 29 führt.

Die insoweit beschriebene Reforming-Anlage 1 eignet sich insbesondere für die Wasserstofferzeugung im Bereich von 1 bis 200m³/h. Sie arbeitet wie folgt:

In Betrieb wird der Brennraum 8 durch den Brenner 11 auf einer Temperatur von 800°C bis 1200°C gehalten. Die über den Abgaskanal 17 ausströmenden Abgase erwärmen die über den Luftzuführungskanal 18 im Gegenstrom einströmende Verbrennungsluft auf bis zu 800°C, wodurch die Abgaswärme genutzt wird. In dem Brennraum kann sich eine Flamme ausbilden. Bei entsprechender Vermeidung kleinräumiger Wirbel, kann auch eine flammenlose Oxidation erreicht werden.

Das in den Brennraum 8 ragende Ende des Rohrs 23 und der Katalysator 39 werden somit auf eine Temperatur zwischen 700°C und 1200°C erhitzt. Das durchströmende Gemisch aus Wasser (H₂O) und Brennstoff (CH₄ oder CₓH_{y}) reagiert hier vorwiegend zu Wasserstoff, Kohlenmonoxid, Kohlendioxid und Wasserdampf. Außerdem können Reste des Brennstoffs in dem Reformat enthalten sein, das nun durch das Sammelrohr 41 durch eine zentrale Öffnung des Wärmeisolationselements 38 hindurch zu dem Verdampfungskühler 35 geführt wird. Hier kommt das Reformat im Wesentlichen noch ungekühlt, d.h. mit der gleichen Temperatur an, mit der es den Katalysator 39 verlassen hat (deutlich über 600°C). Es tritt mit dieser Temperatur in den Ausgangskanal 43 ein. Weil der Verdampfungskühler 35 durch das im Gegenstrom durch den Eingangskanal 37 einströmende flüssige Wasser (das bei 10 bar erst bei 180°C siedet) im Ganzen auf einer Temperatur von kaum mehr als 200°C gehalten wird, erfährt das in den Ausgangskanal 43 eintretende Reformat eine Schockkühlung (Quenchcooling). Es durchläuft den Temperaturbereich von 500 bis 600°C sehr schnell, so dass nahezu keine Rußbildung durch Zerfall von CO auftritt. Sein Wärmeinhalt wird zur Gegenstrom-Wasserverdampfung genutzt. Das abgekühlte Reformat verlässt den Reaktor 22 über die Reformatleitung, wird in dem Reformatkühler 31 zur Wasserabscheidung nochmals etwas gekühlt und tritt mit dem Reaktordruck von etwa 10 bar in die jeweils aktiv geschalteten Adsorptionssäulen 4 ein. Ist eine solche Säule mit dem verbleibenden Kohlenmonoxid gesättigt, wird sie rückgespült. Das CO wird auf diese Weise über die Leitung 5 zu dem Brenner 11 geführt. Dieser Vorgang ist als Druckwechselabsorbtion bekannt. Über eine Ausgangsleitung 44 verlässt gereinigter Wasserstoff die Reforming-Anlage 1.

Sprunghafte Änderungen des Wasserstoffbedarfs erfordern eine sprunghafte Änderung der Förderung der Wasserpumpe 26 und der Brennstoffpumpe 28. Dadurch wird der Laständerung folgend der Massenstrom sowohl in dem Eingangskanal 37 als auch in dem Ausgangskanal 43 geändert. Durch die Änderung des Durchsatzes in dem Ausgangskanal 43 ist sofort die Verdampferleistung in dem Eingangskanal 37 angepasst. Die Dampferzeugung spricht somit unverzögert auf den geänderten Dampfbedarf an. Die Regelung des Brenners 11 kann dagegen deutlich träger ausfallen, ohne die Leistungsfähigkeit der Reforming-Anlage 1 zu beeinträchtigen. Es genügt, wenn der Brenner 11 so geregelt wird, dass der Brennraum 8 auf einer ausreichend hohen (konstanten) Temperatur gehalten wird.

Das Wasser (und gegebenenfalls flüssiger Brennstoff) wird in dem Eingangskanal 37 im Gegenstrom zu dem ausfließenden Reformat verdampft. Das kalte Wasser im Eingangskanal kühlt unmittelbar auch das Rohr 23 und vermeidet somit Wärmeleitungsverluste. Der Wärmeinhalt des Reformats deckt den überwiegenden Teil des für die Wasserverdampfung erforderlichen Wärmestroms.

Z.B. ist die Bilanz wie folgt:

| | |
|---|---|
| 1 Nm³/h CH₄; 20 → 200°C: | - 0,088 kW |
| 1,6 kg/h H₂0; 20 → 200°C (inkl. Verdampfen): | - 1,237 kW |
| | - 1,325 kW |
| 5 Nm³/h Reformat, 900 → -300°C | + 1,237 kW |

Der Fehlbetrag von 0,088 kW (-7%) wird zum Teil ausgeglichen durch die Wärmeleitung im Reformerrohr und durch einen geringen Abgasteilstrom aus der Heizkammer.

Der Abgasteilstrom wird beispielsweise durch ein Thermostatventil in der Abgasleitung 32 reguliert. Der Abgasteilstrom hat insbesondere für das Anfahren der Reforming-Anlage 1 Bedeutung. Beim Starten liefert er die nötige Verdampfungsenergie für das Wasser solange bis ein ausreichender Reformatstrom vorliegt. Danach verlässt das Abgas den Brennraum 8 vorwiegend durch den Abgaskanal 17.

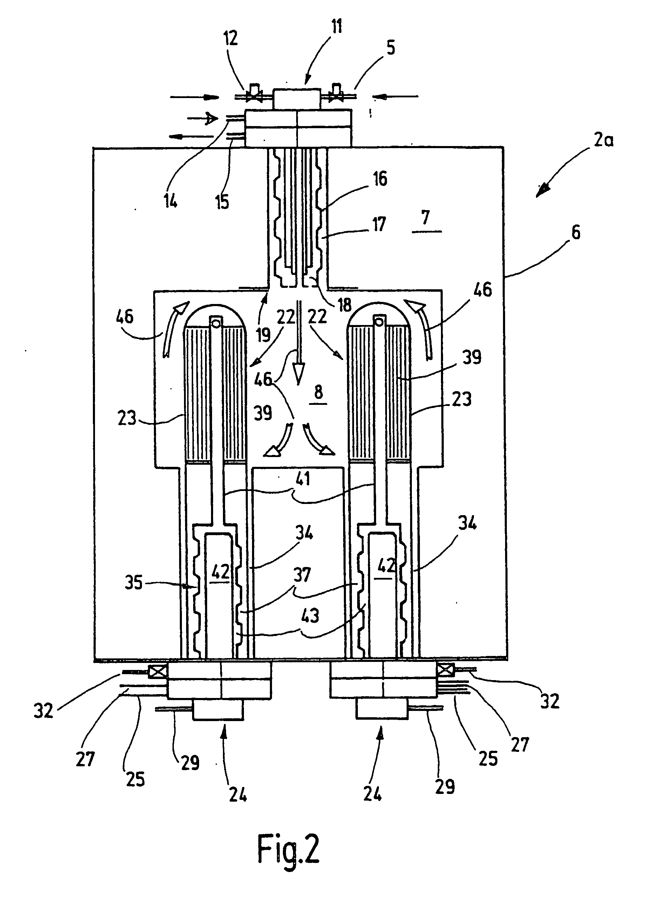

In Figur 2 ist eine abgewandelte Ausführungsform der Erfindung veranschaulicht. Soweit Übereinstimmung mit der vorbeschriebenen Reforming-Anlage 1 besteht, wird unter Zugrundelegung gleicher Bezugszeichen auf die vorstehende Beschreibung verwiesen. Der in Figur 2 veranschaulichte Reformer 2a weist einen vergrößerten Brennraum 8 auf, in den mehrere beispielsweise auf einem zu dem Brenner 11 konzentrischen Kreis angeordnete Reaktoren 22 ragen. Jeder Reaktor 22 hat seinen eigenen Verdampfer - er ist insoweit eine Kompletteinheit. Diese arbeiten wie vorstehend beschrieben. Die Reforming-Anlage 1 ist modular aufgebaut. Die Zusammenfassung mehrerer Reaktoren 22 zu einer Reaktorenbatterie eröffnet die Möglichkeit der Abdeckung eines weiten Leistungsspektrums unter Verwendung einheitlicher Reaktoren 22 durch entsprechende Anpassung von deren Anzahl (Baukastenprinzip). Die Brennraumgestaltung ermöglicht, wie in Figur 2 durch Pfeile 46 angedeutet ist, die Ausbildung einer großräumigen Rezirkulation, so dass die Wärmeerzeugung durch flammenlose Oxidation möglich wird.

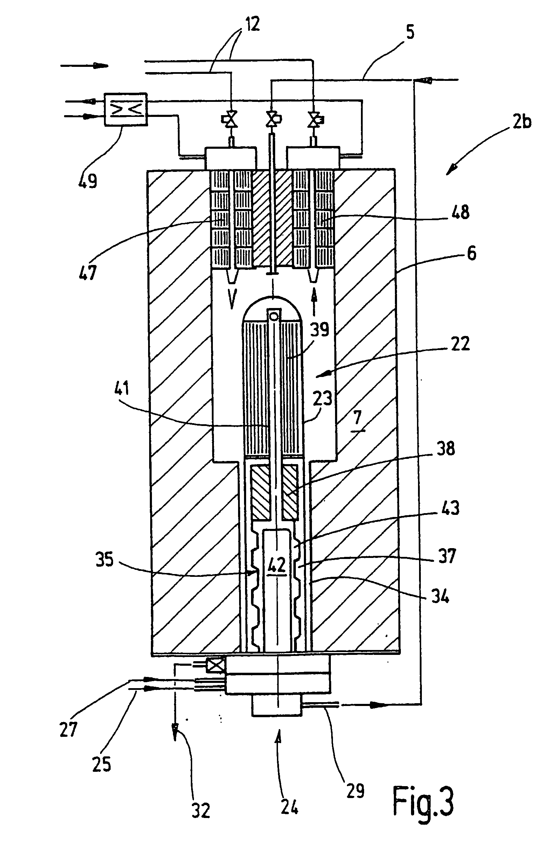

Wie Figur 3 weiter veranschaulicht, kann der Brenner 11 alternativ als Regenerativ-Brenner ausgelegt sein. Bei ansonsten identischer Ausbildung weist dieser Reformer 2b, zwei Regeneratoren 47, 48 auf, die abwechselnd und im Gegentakt von Abgas und Luft durchströmt werden. Die Steuerung übernimmt ein Abgas-Luft-Umschaltventil 49. Der Brennstoff wird beim Startbetrieb über Brennstoffleitungen 12 zugeführt, die durch die Regeneratoren 47, 48 führen. Das Restgas wird über die Leitung 5 direkt in den Brennraum 8 gegeben und oxidiert flammenlos. Der Reformer 2b gestattet eine besonders gute Ausnutzung der Brennstoffenergie.

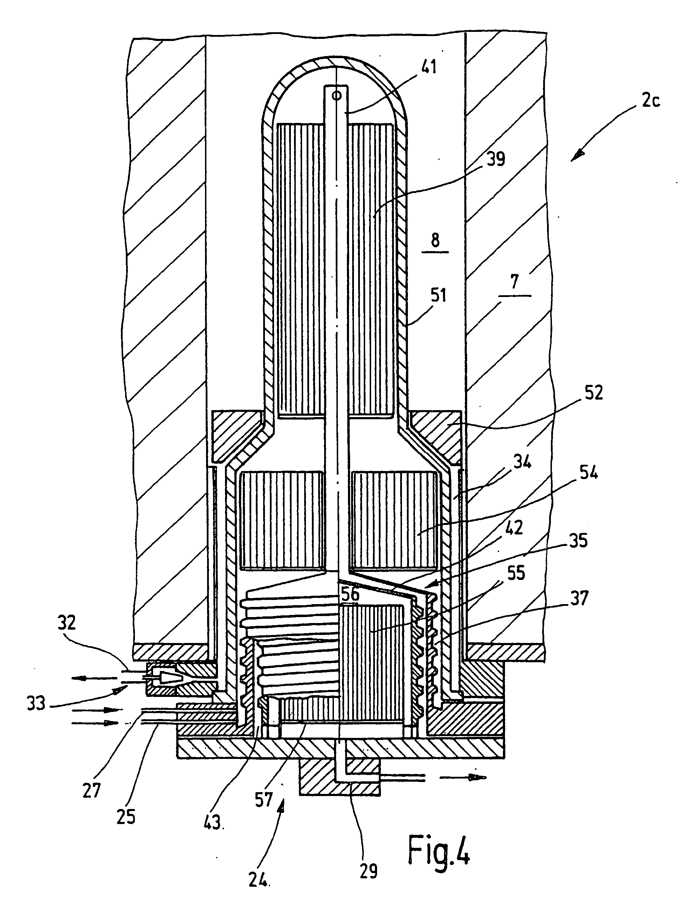

Weiter ist es möglich, anstelle des Rohrs 23 ein z.B. zylindrisches keramisches Reformerrohr vorzusehen. Es kann auch die Form des Reformerrohrs 51 haben (siehe Reformer 2c in Figur 4 mit Metall- oder Keramikrohr). Der Vorzug der Keramik liegt in einer hohen Verschleißfestigkeit bei hoher Temperatur. Wie Figur 4 veranschaulicht, kann ein oberer, den Katalysator 39 enthaltender Abschnitt einen geringeren Durchmesser aufweisen als das übrige Reformerrohr 51. Der direkten Beheizung ist nur der schlankere Abschnitt ausgesetzt. In einem kegelförmigen Übergangsbereich des Reformerrohrs 51 ist ein Strahlungsschirm 52 angeordnet, um eine unkontrollierte Beheizung des übrigen Teils zu vermeiden. Der Strahlungsschirm 52 ist ein wärmeisolierender Ring, der mit dem Reformerrohr 51 einen Spaltkanal einschließt. Dieser geht in den ringspaltförmigen Kanal 34 über, der zu dem Thermostatregler 33 führt.

In dem geweiteten Abschnitt des Reformerrohrs 51 kann unmittelbar oberhalb des Verdampfungskühlers 35 ein Pre-Reforming-Katalysator 54 angeordnet sein, der zur Aufspaltung von längerkettigen Kohlenwasserstoffen im Temperaturbereich von 300°C bis 500°C zu Methan dienen kann. Damit eignet sich der Reformer 2c insbesondere für flüssige Kohlenwasserstoffe, die über einen Kapillarkanal (Leitung 27) zugeführt werden. Ebenso wird, wie bei allen Ausführungsformen, Wasser (Leitung 25) über einen Kapillarkanal in den gemeinsamen Eingangskanal 37 eingedüst, um mit dem Brennstoff gemeinsam verdampft zu werden.

Der Reformer 2c enthält zusätzlich einen Shift-Katalysator 55, der zur Nachoxidation von Kohlenmonoxid mit Wasser zu Kohlendioxid und Wasserstoff dient. Der Shift-Katalysator 55 ist in einem von dem Einsatzkörper 42 umschlossenen Innenraum 56 angeordnet. Dieser ist unmittelbar mit den Ausgangskanal 43 verbunden. Der Shift-Katalysator ist einer Hülse und einem Lochboden 57 so aufgenommen, dass er von dem Reformat zwangsdurchströmt wird.

Das Reformerrohr 51 ist an dem Kopf 24 mit einem Ringflansch gehalten. Dieser steht in Folge der Kühlung durch das zuströmende Wasser relativ kühl. Es können elastische Dichtungen verwendet werden.

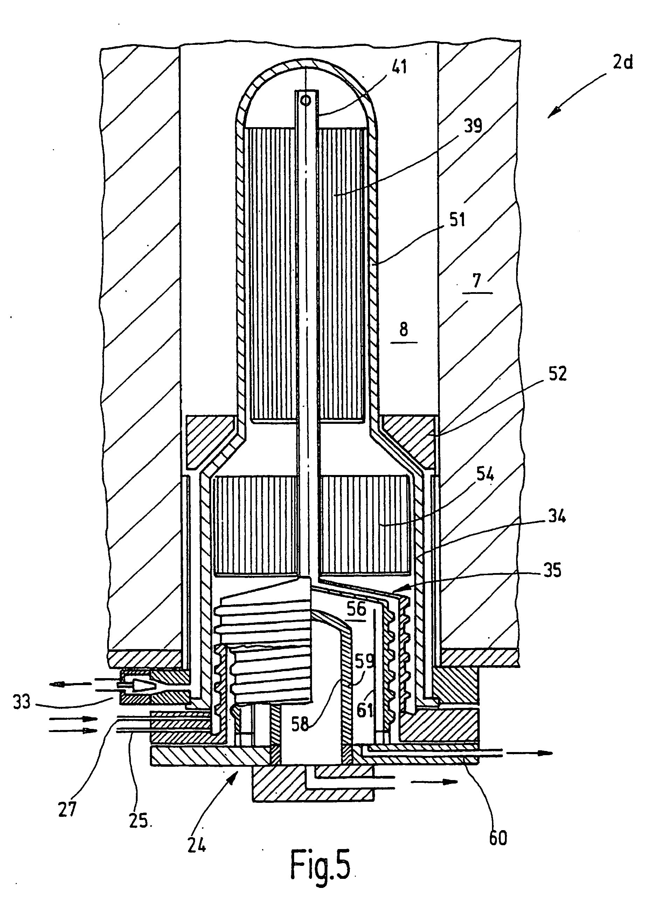

Anstelle des Shift-Katalysators 55 kann, wie Figur 5 veranschaulicht, bei einem entsprechenden Reformer 2d, eine auf einem Stützrohr 58 oder mehreren Stützrohren gehaltene Trennmembran 59 (Palladium-Silber) vorgesehen sein. Diese kann zur Abtrennung von CO dienen und findet hier die geeignete Temperatur vor. Restgas wird durch einen gesonderten Restgaskanal 60 aus dem Innenraum 55 ausgeleitet und beispielsweise dem Brenner 11 wieder zugeführt. Der Restgaskanal ist an dem Fuß der Trennmembran 59 angeordnet. Zur Abschirmung des Restgaskanals 60 zuströmendem Reformat ist eine Rohrhülse 61 vorgesehen, die wie die Trennmembran 59 von dem Boden des Kopfs 24 aufragt und mit der Trennmembran 59 einen Ringspalt festlegt.

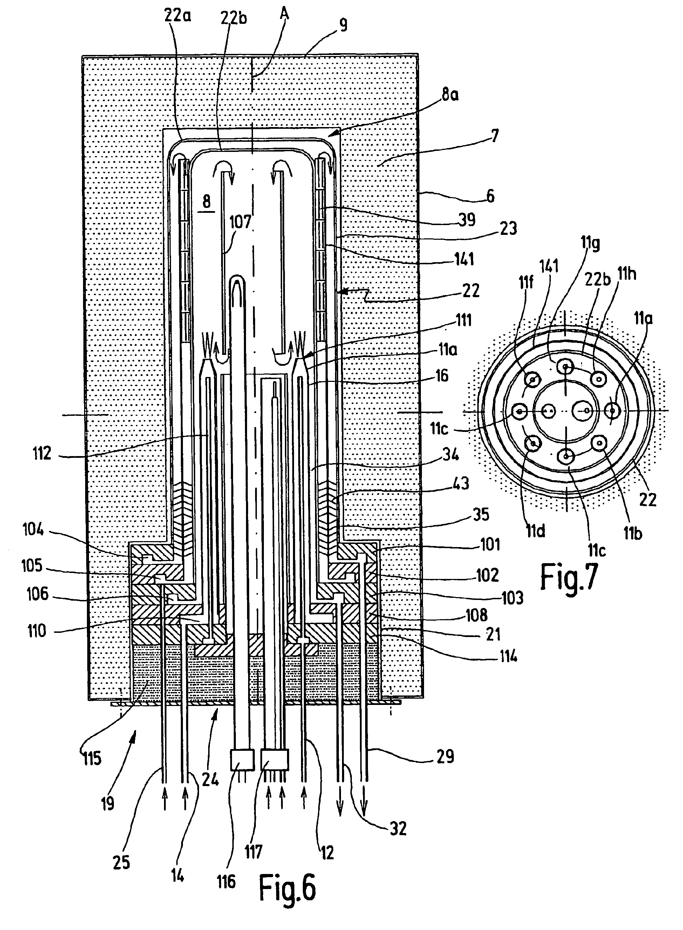

Eine weitere Ausführungsform der Erfindung ist in Figur 6 und 7 veranschaulicht. Die im Zusammenhang mit Figur 1 gegebene Beschreibung gilt unter Zugrundelegung gleicher Bezugszeichen entsprechend. Jedoch unterscheidet sich der Reformer 2 nach Figur 6 von dem Reformer nach Figur 1 wie folgt:

Der Isoliermantel 7 weist lediglich an der Stirnseite 19 des Brennraums 8 den Durchgang 21 auf, durch den sowohl der Reaktor 22 als auch Brenner 11a bis 11h (Figur 7), die eine Brennergruppe 111 bilden, in den Innenraum des Isoliermantels 7 ragen. Der Reaktor 22 ist als doppelwandiges, becherförmiges Gefäß mit einer Außenwand 22a und einer Innenwand 22b ausgebildet, die konzentrisch zueinander angeordnet sind. Der zwischen beiden becherförmigen Wänden 22a, 22b ausgebildete Zwischenraum bildet den Reaktorinnenraum. Dieser ist durch eine rohrförmige Wand 141, die konzentrisch zwischen der Außenwand 22a und der Innenwand 22b sitzt und sich nahezu über die gesamte zylindrische Länge des Reaktors 22 erstreckt, in einen ringförmigen Zuströmkanal (innen) und einen ringförmigen Ausströmkanal (außen) unterteilt. Zwischen der Innenwand 22b und der Wand 141 sitzt der Katalysator 39. Die Wand 141 bildet eine Wärmetauscherwand, an der die Produkte und die Edukte im Gegenstrom Wärme austauschen.

Die Außenwand 22a und die Innenwand 22b sowie die Wand 141 sind an Halteringen 101, 102, 103 befestigt, die axial übereinander gestapelt, aneinander anliegen. Jeder Haltering 101, 102, 103 ist mit einer Ringnut 104, 105, 106 versehen, die als Fluidkanal dient und über einen Spalt mit dem jeweils angeschlossenen Innenvolumen kommuniziert. Dazu ist der jeweilige Haltering 101, 102, 103 außen in Axialrichtung gemessen höher als innen. Die Reformatleitung 29 führt in die Ringnut 104. Die Leitung 25 führt in die Ringnut 105 und die Abgasleitung 32 führt in die Ringnut 106. Letztere kommuniziert mit dem von der becherförmigen Innenwand 22b umschlossenen Innenraum. Dieser bildet zugleich den Brennraum 8, in dem die Brenner 11a bis 11h konzentrisch zu einer Längsmittelachse A angeordnet sind. In dem Brennraum 8 ist ein Leitrohr 107 angeordnet, dessen Durchmesser geringer ist als der Kreis auf dem die Brenner 11a bis 11h angeordnet sind. Es erzwingt eine großräumige Rezirkulationsströmung in dem Brennraum 8 zu Ermöglichung einer flammenlosen Oxidation.

Die Brenner 11a bis 11h sind untereinander gleich ausgebildet. Sie weisen jeweils ein sich zur Mündung hin verjüngendes, endseitig an einem Haltering 108 gehaltenes Rekuperatorrohr 109 auf, dessen innerer Kanal über eine Ringnut 110 an die Leitung 14 zur Luftzuführung angeschlossen ist und das den Wärmeaustausch zwischen Abgasen und Frischluft im Gegenstrom bewirkt. Jedes Rekuperatorrohr 109 umschließt innen ein Brennstoffzuführungsrohr 112. Dieses ist in einem Haltering 114 gefasst, der mit den anderen Halteringen 101, 102, 103, 108 einen Stapel bildet. Dieser ist nach außen hin mit einer relativ dicken Isolierscheibe 115 abgedeckt. Durch die Isolierscheibe 115 und den aus Halteringen gebildeten Stapel hindurch erstrecken sich ein Temperatursensor 116 und ein Zündbrenner 117 in den Brennraum 8.

Die Besonderheit dieser Ausführungsform liegt darin, dass die Brennkammer 8 von dem Reaktor 22 umschlossen ist. Ein von dem Isoliermantel 7 umschlossener Innenraum 8a umschließt seinerseits den Reaktor 22, wobei seine Wandung jedoch keinen direkten Kontakt mit den heißen Verbrennungsgasen hat. Das wärmeisolierende Gehäuse kann somit kostengünstig aufgebaut werden. Es zeigt sich, dass diese Ausführungsform insbesondere bei sehr kleiner Reformerleistung von beispielsweise weniger als 1 Nm³H₂/h vorteilhaft ist. Versuche haben gezeigt, dass bei dieser Anordnung die Regelung der Abgasteilströme zur Ergänzung der Verdampferleistung (siehe Figur 1, Regulierventil 33) entfallen kann.

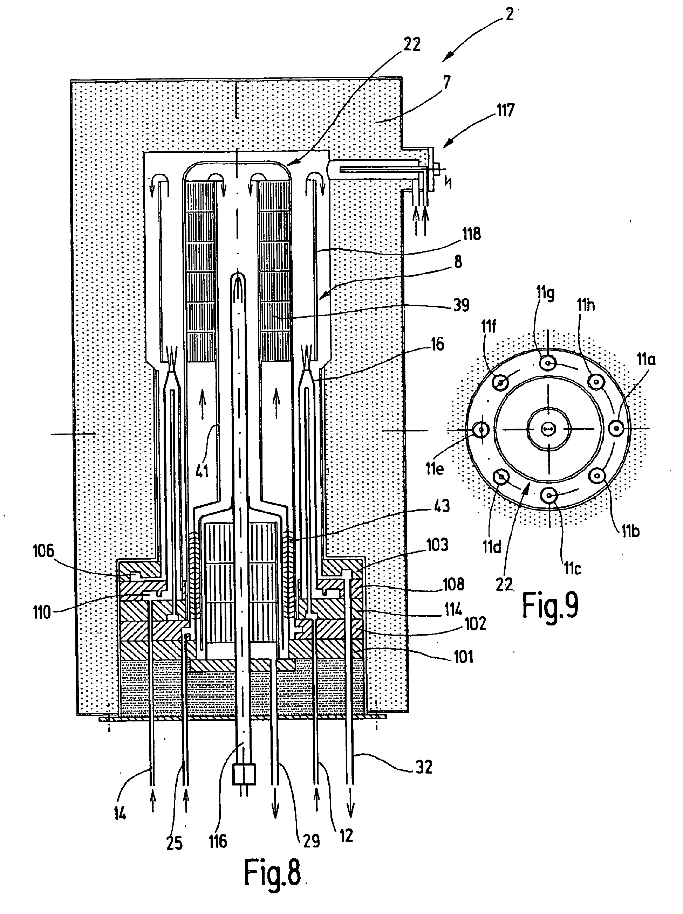

Eine weitere Ausführungsform des erfindungsgemäßen Reformers 2 ist in den Figuren 8 und 9 veranschaulicht. Während der Reformer nach Figur 6 eine Innenbeheizung aufweist, ist der Reformer nach Figur 8 mit Außenbeheizung versehen. Der ähnlich wie nach Figur 1 aufgebaute Reaktor 22 wird, wie insbesondere Figur 9 veranschaulicht, von Brennern 11a bis 11h umgeben. Diese sind prinzipiell wie gemäß Figur 6 aufgebaut. Ihre Rekuperatorrohre 16 enden in einer Düse zur Erzeugung einer großräumigen Rezirkulationsströmung. Um diese in den Brennraum 8 entsprechend zu führen, ist in diesem konzentrisch zu dem Reaktor 22 ein Leitrohr 118 angeordnet. Im Übrigen wird unter Zugrundelegung gleicher Bezugszeichen auf die vorstehenden jeweiligen Beschreibungsteile verwiesen. Der Zündbrenner 117 ist seitlich an einem radialen Durchbruch des Isoliermantels 7 angeordnet und mündet somit radial in den Brennraum 8.

Auch diese Ausführungsform des Reformers 2 ist kompakt und eignet sich insbesondere für kleine Leistungen. Auf eine Regulierung eines Abgasteilstroms, der die Verdampferleistung ergänzt, kann verzichtet werden.

Ein Reformer 2, der schnelle Laständerungen bis zu 100 % im Zeitraum von wenigen Sekunden ermöglicht und der Wasserstoff durch Dampfreformation aus Kohlenwasserstoffen herstellen soll, weist einen Verdampfungskühler zur Kühlung des Reformats und zur Dampferzeugung auf. Der Verdampfungskühler 34 ist in dem Reformer 2 an dem Ende seines Reaktionsgefäßes angeordnet. Er hält das entsprechende Rohrende kühl und nutzt die Reformatabwärme zur Dampferzeugung. Auch sind schnelle Lastwechsel möglich, weil eine Erhöhung der Wassereinleitung sofort auch eine Erhöhung des Reformatanfalls und somit eine Erhöhung der Heizleistung zur Folge hat.

## Patentansprüche

1. Reformer (2) zur Herstellung von Wasserstoff aus einer Kohlenwasserstoffverbindung und Wasser,
mit einem wärmeisolierten Heizraum (8), dem wenigstens eine Wärmequelle zugeordnet ist,
mit wenigstens einem Reaktionsgefäß (23, 51), das sich in den Heizraum (8) hinein erstreckt und in das wenigstens ein Eingangskanal (37) hineinführt und aus dem wenigstens ein Ausgangskanal (43) herausführt,
**dadurch gekennzeichnet,**
**dass** der Eingangskanal (37) und der Ausgangskanal (43) durch einen hauptsächlich durch das Reformat beheizten Verdampfer führen, zu dem ein Verdampfungskühler (35) führen gehört,
**dass** der Eingangskanal (37) als gewindeförmiger Spaltkanal ausgebildet ist,
**dass** der Ausgangskanal (43) als gewindeförmiger Spaltkanal ausgebildet ist.

2. Reformer nach Anspruch 1, **dadurch gekennzeichnet, dass** der Eingangskanal (37) zwischen der Innenwandung des Reaktionsgefäßes (23, 51) und dem Verdampfungskühler (35) ausgebildet ist .

3. Reformer nach Anspruch 1, **dadurch gekennzeichnet, dass** das Reaktionsgefäß (23, 51) ein Druckgefäß ist.

4. Reformer nach Anspruch 1, **dadurch gekennzeichnet, dass** der Verdampfungskühler (35) in dem Reaktionsgefäß (23, 51) angeordnet ist.

5. Reformer nach Anspruch 1, **dadurch gekennzeichnet, dass** der Verdampfungskühler (35) durch einen regulierten Abgasteilstrom beheizt ist.

6. Reformer nach Anspruch 1, **dadurch gekennzeichnet, dass** die Wärmequelle durch einen Brenner (11) gebildet ist und dass der Brenner (11) ein Rekuperatorbrenner oder ein Regeneratorbrenner ist.

7. Reformer nach Anspruch 1, **dadurch gekennzeichnet, dass** das Reaktionsgefäß (23, 51) aus Keramik ausgebildet ist.

8. Reformer nach Anspruch 1, **dadurch gekennzeichnet, dass** zwischen dem Verdampfungskühler (35) und einem Reforming-Katalysator (39) ein Pre-Reforming-Katalysator (54) zur Aufspaltung von höheren Kohlenwasserstoffen ist.

9. Reformer nach Anspruch 1, **dadurch gekennzeichnet, dass** an dem Verdampfungskühler (35) ausgangsseitig eine Wasserstoff-Trennmembran (59) angeordnet ist.

10. Reformer nach Anspruch 1, **dadurch gekennzeichnet, dass** Brenner (11) und Reaktionsgefäß (23, 51) zueinander konzentrisch angeordnet sind.

11. Reformer nach Anspruch 1, **dadurch gekennzeichnet, dass** Brenner (11) und Reaktionsgefäß (23, 51) durch eine gemeinsame Öffnung in den Heizraum (8) hineinragen.

12. Verfahren zur Herstellung von Wasserstoff in einem Dampf-Reforming-Prozess aus Wasser und einer Kohlenwasserstoffverbindung, bei dem unter Nutzung des Reformers nach Anspruch 1 Wasser unter Ausnutzung der in dem erzeugten Reformat enthaltenen Wärme verdampft wird.

13. Verfahren nach Anspruch 12, **dadurch gekennzeichnet, dass** das Wasser und die Kohlenwasserstoffverbindung als gemeinsamer Stoffstrom verdampft werden.

## Claims

1. Reformer (2) for the production of hydrogen from a hydrocarbon compound and water,
with a thermally insulated heating chamber (8) having at least one associated heat source,
with at least one reaction vessel (23, 51), which extends into the heating chamber (8) and passes into the at least one inlet duct (37) and out of the at least one outlet duct (43),
**characterised in that**
the inlet duct (37) and the outlet duct (43) pass through an evaporator, which is heated mainly by the reformate and includes an evaporative cooler (35),
that the inlet duct (37) is configured as a screw thread-shaped split duct,
that the outlet duct (43) is configured as a screw thread-shaped split duct.

2. Reformer according to claim 1, **characterised in that** the inlet duct (37) is configured between the inside wall of the reaction vessel (23, 51) and the evaporative cooler (35).

3. Reformer according to claim 1, **characterised in that** the reaction vessel (23, 51) is a pressure vessel.

4. Reformer according to claim 1, **characterised in that** the evaporative cooler (35) is arranged in the reaction vessel (23, 51).

5. Reformer according to claim 1, **characterised in that** the evaporative cooler (35) is heated by a regulated part-flow of waste gas.

6. Reformer according to claim 1, **characterised in that** the heat source is formed by a burner (11) and that the burner (11) is a recuperator burner or a regenerator burner.

7. Reformer according to claim 1, **characterised in that** the reaction vessel (23, 51) is made from ceramic.

8. Reformer according to claim 1, **characterised in that** between the evaporative cooler (35) and a reforming catalyst (39) there is a pre-reforming catalyst (54) for splitting higher hydrocarbons.

9. Reformer according to claim 1, **characterised in that** a hydrogen separation membrane (59) is arranged on the evaporative cooler (35) on the outlet side.

10. Reformer according to claim 1, **characterised in that** the burner (11) and the reaction vessel (23, 51) are arranged concentrically to one another.

11. Reformer according to claim 1, **characterised in that** the burner (11) and the reaction vessel (23, 51) project into the heating chamber (8) through a common opening.

12. Method for producing hydrogen from water and a hydrocarbon compound in a steam reforming process, in which using the reformer according to claim 1 water is evaporated utilising the heat contained in the generated reformate.

13. Method according to claim 12, **characterised in that** the water and the hydrocarbon compound are evaporated as a combined substance flow.

## Revendications

1. Reformeur (2) pour produire de l'hydrogène à partir d'un hydrocarbure et d'eau,
comprenant une chambre de chauffe (8) isolée thermiquement, à laquelle est associée au moins une source de chaleur,
comprenant au moins un récipient de réaction (23, 51) qui s'étend dans la chambre de chauffe (8) et dans lequel mène au moins un conduit d'entrée (37) et dont part au moins un conduit de sortie (43),
**caractérisé**
**en ce que** le conduit d'entrée (37) et le conduit de sortie (43) passent dans un évaporateur qui est chauffé essentiellement par le reformat et qui comprend un refroidisseur par évaporation (35),
**en ce que** le conduit d'entrée (37) est réalisé comme conduit hélicoïdal en forme de fente,
**en ce que** le conduit de sortie (43) est réalisé comme conduit hélicoïdal en forme de fente.

2. Reformeur selon la revendication 1, **caractérisé en ce que** le conduit d'entrée (37) est réalisé entre la paroi intérieure du récipient de réaction (23, 51) et le refroidisseur par évaporation (35).

3. Reformeur selon la revendication 1, **caractérisé en ce que** le récipient de réaction (23, 51) est un récipient de pression.

4. Reformeur selon la revendication 1, **caractérisé en ce que** le refroidisseur par évaporation (35) est disposé dans le récipient de réaction (23, 51).

5. Reformeur selon la revendication 1, **caractérisé en ce que** le refroidisseur par évaporation (35) est chauffé par un flux partiel régulé de gaz brûlés.

6. Reformeur selon la revendication 1, **caractérisé en ce que** la source de chaleur est constituée d'un brûleur (11) et **en ce que** le brûleur (11) est un brûleur récupérateur ou un brûleur régénérateur.

7. Reformeur selon la revendication 1, **caractérisé en ce que** le récipient de réaction (23, 51) et réalisé en céramique.

8. Reformeur selon la revendication 1, **caractérisé en ce qu'**il est prévu, entre le refroidisseur par évaporation (35) et un catalyseur de reformage (39), un catalyseur de pré-reformage (54) destiné à fractionner des hydrocarbures supérieurs.

9. Reformeur selon la revendication 1, **caractérisé en ce qu'**une membrane de séparation d'hydrogène est disposée côté sortie du refroidisseur par évaporation (35).

10. Reformeur selon la revendication 1, **caractérisé en ce que** le brûleur (11) et le récipient de réaction (23, 51) sont disposés de façon concentrique l'un par rapport à l'autre.

11. Reformeur selon la revendication 1, **caractérisé en ce que** le brûleur (11) et le récipient de réaction (23, 51) pénètrent par une ouverture commune dans la chambre de chauffe (8).

12. Procédé de production d'hydrogène par un processus de reformage à la vapeur, à partir d'eau et d'un hydrocarbure, au cours duquel on utilise le reformeur selon la revendication 1 pour faire évaporer de l'eau, en exploitant la chaleur contenue dans le reformat produit.

13. Procédé selon la revendication 12, **caractérisé en ce que** l'eau et l'hydrocarbure sont évaporés en tant que flux de matière commun.
